(19) Europäisches Patentamt

European Patent Office

Office européen des brevets

(11) Veröffentlichungsnummer: **0 264 012 B1**

# (12) EUROPÄISCHE PATENTSCHRIFT

(45) Veröffentlichungstag der Patentschrift: **29.04.92**

(21) Anmeldenummer: **87114118.0**

(22) Anmeldetag: **27.09.87**

(51) Int. Cl.⁵: **B29C 65/02**, //B29L9:00, B29L23:20

---

(54) Verfahren zum Verbinden von sich überlappenden Rändern einer mehrschichtigen Folie und nach dem Verfahren hergestelltes Tubenrohr.

---

(30) Priorität: **15.10.86 CH 4118/86**

(43) Veröffentlichungstag der Anmeldung: **20.04.88 Patentblatt 88/16**

(45) Bekanntmachung des Hinweises auf die Patenterteilung: **29.04.92 Patentblatt 92/18**

(84) Benannte Vertragsstaaten: **AT BE CH DE ES FR GB GR IT LI LU NL SE**

(56) Entgegenhaltungen:

| | |
|---|---|
| AT-B- 339 677 | DE-B- 1 256 527 |
| FR-A- 1 453 997 | FR-A- 2 176 558 |
| FR-A- 2 240 105 | GB-A- 559 657 |
| GB-A- 879 637 | GB-A- 1 013 656 |
| GB-A- 1 045 279 | GB-A- 1 054 528 |
| GB-A- 1 103 453 | GB-A- 2 024 097 |
| US-A- 3 952 676 | US-A- 4 330 351 |
| US-A- 4 366 014 | |

(73) Patentinhaber: **KMK Karl Mägerle Lizenz AG Baarerstrasse 57 CH-6300 ZUG(CH)**

(72) Erfinder: **Ueberegger, Henry Haldenstrasse 12 CH-8345 Adetswil(CH)**

(74) Vertreter: **Hiebsch, Gerhard F., Dipl.-Ing. et al Hiebsch & Peege Patentanwälte Postfach464 Erzbergerstrasse 5a W-7700 Singen 1(DE)**

## Beschreibung

Die Erfindung betrifft ein Verfahren nach dem Oberbegriff des Anspruches 1 und ein Tubenrohr.

Die Schichten einer mehrschichtigen Folie haben unterschiedliche Aufgaben, wenn die Folie beispielsweise als Verpackungsmaterial dient. Die dem zu verpackenden Gut zugekehrte Schicht muss gegenüber diesem Gut chemisch neutral sein. Mindestens eine Zwischenschicht dient zur Erzielung der gewünschten Festigkeit sowie der gewünschten Elastizität, insbesondere bei Verwendung der Folie für einen Verpackungsbehälter. Die äussere Schicht muss bedruckbar sein und soll eine optisch und physisch ansprechende Oberfläche aufweisen. Ferner kann es bei diffundierendem Gut erforderlich sein, eine der Zwischenschichten als diffusionshemmende Barriere auszubilden. Besteht beispielsweise eine der Zwischenschichten aus Metall, dann ist üblicherweise eine Haftschicht auf beiden Seiten des Metalls erforderlich, um eine sichere Verbindung mit den übrigen Schichten zu gewährleisten. Mindestens eine der äusseren Schichten besteht aus einem schweissbaren Kunststoff, damit die herzustellende Verpackung zugeschweisst werden kann.

Ein für Verpackungstuben bestimmtes Tubenrohr weist üblicherweise eine Längsnaht auf, an welcher die sich überlappenden Ränder der mehrschichtigen Folie miteinander verschweisst sind.

Dabei ist üblicherweise die Innenseite des einen Randes mit der Aussenseite des anderen Randes verschweisst. Eine solche Naht bildet zwar einen dichten Abschluss, weist jedoch den Nachteil auf, dass die dem Gut zugekehrte innere Schicht in Folge des Mehrschichtenaufbaues der Folie entlang der Naht unterbrochen ist. Dadurch besteht das Risiko, dass das verpackte Gut im Bereich der Naht nicht nur mit der chemisch neutralen Schicht, sondern auch mit den übrigen Schichten in Berührung kommt.

Aus der GB-A 1 013 656 ist bekannt, Schichten einer Mehrschichtfolie, die nicht mit dem Verpakkungsgut in Berührung kommen sollen, abzudekken. Die Abdeckung erfolgt durch einen streifenförmigen Fortsatz, der die zu schützenden Schichten eines inneren Folienrandes überragt und aus dem gleichen, dem Behälterinneren zugewandten, gegenüber dem Verpackungsgut neutralen Schichtwerkstoff gebildet ist. Bei Bildung der Behälterschweissnaht wird der Fortsatz unter Bildung einer weiteren Schweissnaht, die zu schützenden Schichten überdeckend, mit dem neutralen Schichtwerkstoff verbunden.

Eine mit einem streifenförmigen Fortsatz ausgebildete Mehrschichtfolie wird hergestellt, indem eine packgutneutrale breitere Kunststoffschicht auf die übrigen Laminatschichtungen aufkaschiert wird.

Es können auch gleich breite Schichtungen verbunden werden, wobei in diesem Fall ein Randbereich unverbunden zu halten ist, so dass im unverbundenen Randbereich der Teil des Laminates mit zu schützenden Schichtungen entfernt werden kann. Dieser Teil der Verfahrensführung zur Herstellung eines Tubenrohres wird als nachteilig empfunden, da entweder aufwendige Vorkehren zur Laminierung ungleich breiter Schichtungen oder zur Laminierung gleich breiter Schichtungen unter Belassung eines verbindungsfreien Randbereiches zu treffen sind. Im übrigen verbleibt bei der bekannten Ueberdeckung ein von der Tubenrohrinnenseite, den zu schützenden Schichtungen und dem verschweissten Fortsatz begrenzter Luftraum, der bei aufgebrachtem Tubenkopf und Verschluss des hinteren Tubenendes eine entsprechende Luftmenge allseits umschlossen gefangen hält. Bei Zusammendrücken der Tube gefährden die von der Kompression der Luft ausgehenden Druckkräfte die Stabilität der Schweissnähte, so dass ein Aufbrechen der Fortsatzschweissnaht mit der Folge nicht auszuschliessen ist, dass Packgut in unerwünschter Weise mit weiteren Schichtwerkstoffen der Mehrschichtfolie in Berührung kommt.

Hiervon ausgehend liegt der Erfindung die Aufgabe zugrunde, ein Verfahren zur Herstellung eines Tubenrohres zu schaffen, mit dem die Nachteile des bekannten Verfahrens vermieden sind, insbesondere ist es so zu gestalten, dass eine Berührung des verpackten Gutes mit bestimmten Schichten einer Mehrschicht-Laminatfolie mit Sicherheit vermieden wird.

Die gestellte Aufgabe wird erfindungsgemäss durch die im kennzeichnenden Teil des Anspruches 1 angegebenen Merkmale gelöst.

Durch das erfindungsgemässe Verfahren überragt die dem zu verpackenden Gut zugekehrte innere Schicht durch eine schräge oder abgestufte Beschneidung des innenliegenden Randes die Schnittflächen der übrigen Schichten dieses Randes, so dass die innere Schicht mit der inneren Schicht des aussenliegenden Randes durch den Schweissvorgang verbunden werden kann. Der Schweissvorgang erfolgt zwischen zwei Werkzeugen, die die überlappenden Ränder miteinander verbinden und die überragende Schicht und die innenliegende Schicht des äusseren Randes zur Bildung einer flachen, nahtlosen, die Schweissnaht überdeckenden Schicht ineinanderfliessen lassen.

Damit wird eine Verbindung der mehrschichtigen Folie sowohl durch die sich überlappenden Oberflächen der beiden Ränder als auch durch die durchgehende innere Schicht hergestellt. Eine solche Verbindung ist nicht nur dicht sondern auch mechanisch besonders stabil. Auch gewährleistet ist durch vollständige Ueberdeckung der Naht durch die innere Schicht, dass bei einem hohen geforderten Reinheitsgrad des Packgutes, das Gut mit irgendeiner der Zwischenschichten eine unerwünschte oder sogar unzulässige Verbindung eingeht, so dass nach dem erfindungsgemässen Verfahren hergestellt Verbindungen auch zum Verpakken von Gütern geeignet sind, für welche bisher eine spezielle Auskleidung eines Behälters oder eine doppelte Verpackung erforderlich waren.

Anspruch 2 enthält eine bevorzugte Bemessungsregel für das Beschneiden des Randes.

Bei einer Ausführungsform nach Anspruch 3 wird die Schweisswärme in der innerhalb der Folie eingebetteten metallischen Schicht erzeugt, so dass eine gezielt steuerbare rasche Aufheizung der miteinander zu verschweissenden Schichten möglich ist. Dadurch lässt sich auch eine unerwünschte Aufheizung anderer Stellen vermeiden, so dass der anschliessende Abkühlvorgang zur Erhöhung der Produktionsleistung verkürzt werden kann.

Diese Ausführungsform wird durch die nach Anspruch 4 erwähnte fortgebildet, indem bevorzugte Schichten durch induktive Erwärmung aufgeheizt werden.

Bei einer Ausführungsform nach Anspruch 5 erfolgt die Schweissverbindung in einer Längsnut eines der Werkzeuge, welches beispielsweise ein umlaufendes Stahlband sein kann. Gemäss Anspruch 6 kann dieses als Werkzeug dienende Stahlband vorgeheizt sein, um den Schweissvorgang zu beschleunigen und insbesondere ein Ineinanderfliessen der innenliegenden Schichten beider Ränder zu gewährleisten.

Die Erfindung betrifft gemäss Anspruch 7 ein Tubenrohr für eine Verpackungstube, dessen Naht nach dem vorstehenden Verfahren hergestellt wird. Durch die erfindungsgemässe Lösung lassen sich Verpackungstuben aus unterschiedlichem Laminat auch für Güter herstellen, die gegenüber Metallen, wie beispielsweise Aluminium, ein aggressives Verhalten zeigen. Das erfindungsgemässe Verfahren ist bei der Herstellung eines Tubenrohres für eine Verpackungstube gegenüber herkömmlichen Verfahren kaum mit Mehrkosten verbunden.

Eine Ausführungsform des Tubenrohres nach Anspruch 8 enthält eine bevorzugte Materialangabe.

Anhand der Zeichnungen wird ein Ausführungsbeispiel näher erläutert. Es zeigt:

Fig. 1 die sich überlappenden Ränder einer mehrschichtigen Folie im Querschnitt durch eine herzustellende Naht, vor dem Verschweissen,

Fig. 2 den Aufbau der mehrschichtigen Folie,

Fig. 3 die zwischen zwei als Werkzeuge dienenden Bändern herzustellende Naht im Querschnitt, und

Fig. 4 die fertige Naht im Querschnitt.

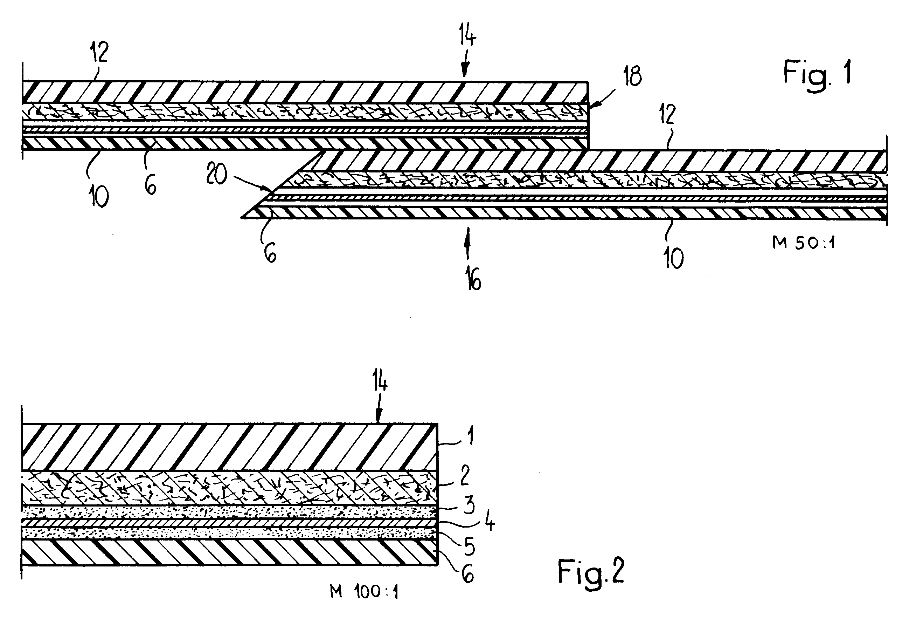

Die Fig. 1 zeigt zwei sich überlappende Ränder einer mehrschichtigen Folie, beispielsweise für eine herzustellende Naht eines Tubenrohres für eine Verpackungstube. Beide Folienränder weisen eine Innenseite 10 und eine Aussenseite 12 auf. Die Innenseite 10 ist dem zu verpackenden Gut zugekehrt. Bei der dargestellten Anordnung liegt die Innenseite 10 des einen Randes 14 auf der Aussenseite 12 des anderen Randes 16. Die Kante 18 des aussenliegenden Randes 14 ist gerade geschnitten. Die Kante 20 des innenliegenden Randes 16 ist derart schräg geschnitten, dass die von den aufeinander zu pressenden Flächen 10, 12 entfernt liegende Schicht 6 die anderen Schichten dieses Randes überragt. Die Schnittkante 20 weist auf die Querrichtung bezogen einen bevorzugten Winkel von 40° auf. Der Fig. 1 liegt ein Massstab von 50:1 zugrunde.

Die Fig. 2 zeigt den äusseren Rand 14 in einem Massstab von 100:1, um die Erläuterungen der einzelnen Schichten zu erleichtern. Die äussere Schicht 1 besteht aus einem thermoplastischen Kunststoff, beispielsweise aus Polyehtylen, Polypropylen oder aus deren Copolymeren. Die zweite Schicht 2 besteht aus Papier, um der Folie die gewünschte Steifigkeit zu verleihen. Die dritte Schicht 3 ist eine Kunststoff-Haftschicht, um eine sichere Verbindung zur vierten Schicht 4 herzustellen, welche aus Aluminium besteht. Die Aluminiumschicht 4 dient insbesondere zur Erzielung der gewünschten Elastizität und gegebenenfalls auch als Diffusionsbarriere. Auf der anderen Seite der Aluminiumschicht 4 befindet sich wiederum eine Kunststoff-Haftschicht 5, um eine sichere Verbindung zwischen der Aluminiumschicht 4 und der inneren Schicht 6 herzustellen. Die innere Schicht 6 ist wiederum aus einem thermoplastischen Kunststoff, welcher ebenfalls wie die äussere Schicht 1 schweissbar ist. In ihrer Beschaffenheit kann sich die innere Schicht 6 jedoch von der äusseren Schicht 1 unterschieden. Die innere Schicht 6 kann beispielsweise transparent sein, während die zum Bedrucken bestimmte äussere Schicht 1 vorzugsweise eingefärbt ist.

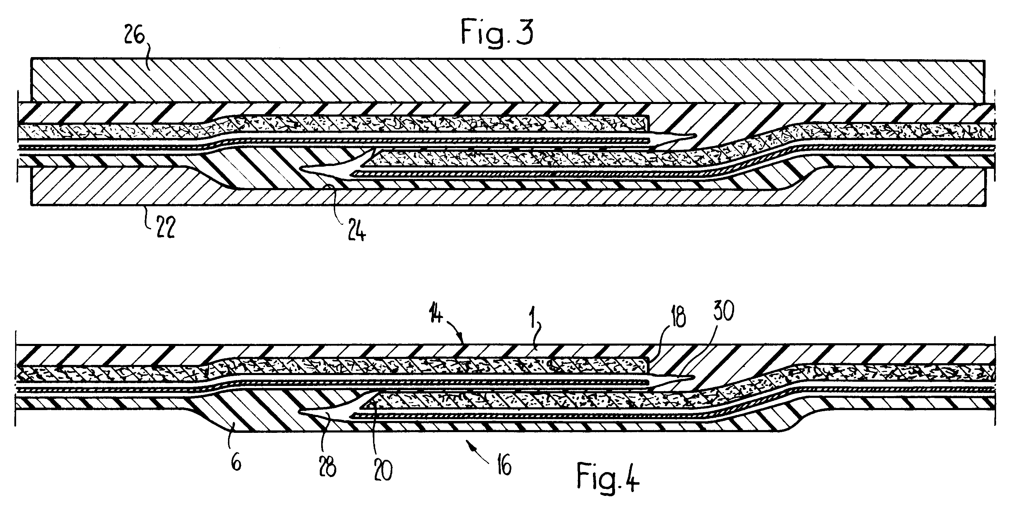

Die Fig. 3 zeigt die sich überlappenden Schichten nach der Fig. 1 zwischen zwei als Werkzeug dienenden Bändern 22 und 26. Das innere Band 22 ist eine Stahlband mit einer Längsnut 24, in welche die sich überlappenden Ränder 14 und 16 durch das gegenüberliegende Band 26 während des Schweissvorganges hineingepresst werden. Die Bänder 22 und 26 sind durch nicht dargestellte Mittel umlaufend angetrieben, so dass die Verbindung der beiden Folienränder 14 und 16 endlos und kontinuierlich erfolgt.

Die Schweisswärme wird in den beiden sich überlappenden Aluminiumschichten 4 (Fig. 2) mittels Hochfrequenz induktiv erzeugt. Zur Unterstützung ist das innere Band 22 zudem vorgeheizt. Die unmittelbar aufgeheizten Aluminiumschichten 4 beider Ränder geben Wärme an die benachbarten Kunststoffschichten ab, insbesondere an die beiden Haftschichten 3 und 5 und darüberhinaus auch an die thermoplastische Kunststoffschicht 6, welche die innere Schicht bildet und mit der inneren Schicht des gegenüberliegenden Randes zu verschweissen ist. Auf die äussere Kunststoffschicht 1 wird durch die aufgeheizte Aluminiumschicht 4 vergleichsweise wenig Wärme übertragen, da die zwischenliegende Papierschicht 2 isolierend wirkt. Durch die intensivere Aufheizung der innenliegenden Kunststoffschichten 6 beider Ränder 14 und 16 erfolgt eine innige Schweissverbindung, wobei die Kunststoffschicht 6 des innenliegenden Randes 16 durch die schräge Schnittkante 20 zum Ueberfliessen gebracht wird. Die schräge Schnittkante 20 bewirkt ferner ein grösseres Materialangebot der Kunststoffschicht 6. Durch den Anpressdruck zwischen den beiden Bändern 22 und 26 in die Nut 24 hinein ergibt sich ein praktisch nahtloser Uebergang zwischen den Kunststoffschichten 6 der beiden Ränder 14 und 16.

In der Fig. 4 ist die fertige Verbindung im Querschnitt dargestellt. Es ist daraus ersichtlich, dass die thermoplastische Kunststoffschicht 1 des innenliegenden Randes 16 im Bereich der schrägen Schnittkante 20 und damit verbunden auch die beiden Haftschichten 3 und 5 (Fig. 2) zu einem zipfelartigen Teil 28 herausgequetscht wurden. Dieser zipfelartige Teil 28 ragt zwar in die innere Kunststoff schicht 6 hinein, stellt aber keine Unterbrechung der von den beiden Rändern 14 und 16 zusammengeflossenen Kunststoffschicht 6 dar.

Die äussere Kunststoffschicht 1 beider Ränder 14 und 16 ist ebenfalls zu einer durchgehenden Schicht zusammengeflossen, und zwar insbesondere durch den auf die Schicht 1 des äusseren Randes 14 vom Aussenband 26, welches ebenfalls vorzugsweise ein Stahlband ist, ausgeübten Druck. An der Schnittkante 18 des äusseren Randes 14 wurde ein zipfelartiges Teil 30 der Haftschichten 3 und 5 (Fig. 2) herausgepresst, welches in die Schicht 1 eingedrungen ist, ohne diese jedoch zu unterbrechen.

**Patentansprüche**

1. Verfahren zum Verbinden von sich überlappenden Rändern (14, 16) mit Kanten (18,20) aus einer eine Innenseite (10) und eine Aussenseite (12) aufweisenden mehrschichtigen Folie, die mindestens auf der Innenseite (10) eine Schicht (6) aus schweissbarem Kunststoff aufweist, die die Kante (20) der Innenseite (10) überragt, bei welchem Verfahren die Innenseite (10) des Randes (14) auf die Aussenseite (12) des Randes (16) und die die Kante (20) der Innenseite (10) überragende Schicht (6) gegen die Innenseite (10) des Randes (16) gepresst und die Ränder (14, 16) und die Kante (20) der Innenseite (10) überragende Schicht (6) mit der Innenseite (10) durch Einwirkung von Wärme und Druck miteinander zur Bildung einer Schweissnaht verschweisst werden, dadurch gekennzeichnet, dass die Kante (20) des Randes (16) vor dem Aufeinanderpressen in Längsrichtung derart schräg oder abgestuft beschnitten wird, dass die von den aufeinanderzupressenden Flächen (10, 12) entfernt liegende Schicht (6) die andere Schicht oder Schichten (1 bis 5) der Folie überragt, die Ränder (14, 16) zwischen zwei Werkzeugen (22, 26), wobei mindestens eines der Werkzeuge (22, 26) die Ränder (14, 16) aufnehmende Längsnut (24) aufweist, eingebracht, in der die Schicht (6) des Randes (16) und die Schicht (6) des Randes (14) durch Ineinanderfliessen zu einer nahtlosen, flachen, die Schweissnaht überdeckenden Schicht geformt werden.

2. Verfahren nach Anspruch 1, dadurch gekennzeichnet, dass die Kante (20) des Randes (16) in einem Winkel von annähernd 40°, bezogen auf die Querrichtung, beschnitten wird.

3. Verfahren nach Anspruch 1 oder 2, dadurch gekennzeichnet, dass unter Verwendung einer Folie mit einer Metallschicht (4) und mindestens einer Haftschicht (3, 5) zwischen der Metallschicht (4) und der äusseren Schicht (1) und inneren Schicht (6) die Einwirkung von Wärme auf die äussere Schicht (1) und die innere Schicht (6) durch induktive Erwärmung der Metallschicht (4) ausgelöst wird.

4. Verfahren nach Anspruch 3, dadurch gekennzeichnet, dass durch eine isolierende Schicht (2) zwischen der Metallschicht (4) und der Schicht (1) bei der Verschweissung die Aufheizung der inneren Schicht (6) des Randes (14) und der äusseren Schicht (1) des Randes (16) gesteuert wird.

5. Verfahren nach einem der vorangehenden Ansprüche 1 bis 4, dadurch gekennzeichnet, dass zur kontinuierlichen Verbindung der überlappenden Ränder (14, 16), die Ränder (14, 16) zwischen zwei umlaufend angetriebenen Bändern (22, 26) mit in einem Band (22) angeordneter Längsnut (24) eingepresst aufgenommen werden.

6. Verfahren nach Anspruch 5, dadurch gekennzeichnet, dass das Band (22) mit Längsnut (24) vorgeheizt wird.

7. Tubenrohr für eine Verpackungstube, die aus einer mehrschichtigen, schweissbare Schichten (1, 6) aufweisenden Folie gebildet ist mit einer Schweissnaht aus überlappenden Rändern (14, 16) der Folie mit Kanten (18, 20), wobei die sich im Inneren des Tubenrohres befindende Kante (20) durch eine Schicht (6) überdeckt ist, dadurch gekennzeichnet, dass die die Kante (20) überdeckende Schicht (6) durch Ineinanderfliessen als eine nahtlose, flache, die Schweissnaht überdeckende Schicht ausgebildet ist.

8. Tubenrohr nach Anspruch 7, dadurch gekennzeichnet, dass die die Schweissnaht überdeckende Schicht aus Polyethylen, Polypropylen und deren Copolymeren besteht.

**Claims**

1. A method of joining mutually overlaping edge portions (14, 16) with edges (18, 20) of a multi-layer foil which has an inside (10) and an outside (12) and which at least on the inside (10) has a layer (6) of weldable plastic material, which projects beyond the edge (20) of the inside (10), in which method the inside (10) of the edge portion (14) is pressed on to the outside (12) of the edge portion (16) and the layer (6) which projects beyond the edge (20) of the inside (10) is pressed against the inside (10) of the edge portion (16) and the edge portions and the layer (6) which projects beyond the edge (20) of the inside (10) are welded together to the inside (10) by the action of heat and pressure to form a welded seam, characterised in that prior to the operation of pressing the portions together the edge (20) of the edge portion (16) is cut inclinedly or in a stepped configuration in the longitudinal direction in such a way that the layer (6) which is remote from the surfaces (10, 12) which are to be pressed together projects beyond the other layer or layers (1 to 5) of the foil, the edge portions (14, 16) are introduced between two tools (22, 26) wherein at least one of the tools (22, 26) has a longitudinal groove (24) which accomodates the edge portions (14, 16) and in which the layer (6) of the edge portion (16) and the layer (6) of the edge portion (14), by flowing into each other, are formed into a seam-less, flat layer which covers over the welded seam.

2. A method according to claim 1 characterised in that the edge (20) of the edge portion (16) is cut at an angle of approximately 40° with respect to the transverse direction.

3. A method according to claim 1 or claim 2 characterised in that, using a foil with a metal layer (4) and at least one bonding layer (3, 5) between the metal layer (4) and the outer layer (1) and the inner layer (6), the effect of heat on the outer layer (1) and the inner layer (6) is produced by inductive heating Of the metal layer (4).

4. A method according to claim 3 characterised in that, in the welding operation, heating of the inner layer (6) of the edge portion (14) and the outer layer (1) of the edge portion (16) is controlled by an insulating layer (2) between the metal layer (4) and the layer (1).

5. A method according to one of preceding claim 1 to 4 characterised in that, for continuously joining the overlapping edge portions (14, 16), the edge portions (14, 16) are accommodated in a condition of being pressed in between two belts (22, 26) which are driven in circulation, with a longitudinal groove (24) arranged in one belt (22).

6. A method according to claim 5 characterised in that the belt (22) with longitudinal groove (24) is preheated.

7. A tube body for a packaging tube which is formed from a multi-layer foil having weldable layers (1, 6), with a welded seam comprising overlapping edge portions (14, 16) of the foil with edges (18, 20), wherein the edge (20) disposed in the interior of the tube body is covered over by a layer (6), characterised in that the layer (6) which covers over the edge (20) is formed by the materials flowing into each other as a seam-less, flat layer which covers over the welded seam.

8. A tube body according to claim 7 characterised in that the layer which covers over the welded seam comprises polyethylene, polypropylene and copolymers thereof.

**Revendications**

1. Procédé pour réaliser la liaison de zones de bordure (14, 16) qui se chevauchent et comportent des bords (18, 20), d'une feuille à couches multiples qui présente une face intérieure (10) et une face extérieure (12), et au moins sur la face intérieure (10), une couche (6) en une matière plastique susceptible d'être soudée et dépassant du bord (20) de la face intérieure (10), procédé selon lequel la face intérieure (10) de la zone de bordure (14) est pressée contre la face extérieure (12) de la zone de bordure (16) et la couche (6) dépassant du bord (20) de la face intérieure (10) est pressée contre la face intérieure (10) de la zone de bordure (16), et les zones de bordure (14, 16) ainsi que la couche (6) dépassant du bord (20) de la face intérieure (10) et la face intérieure (10) sont soudées ensemble par l'action de la chaleur et de la pression, pour former un joint soudé,
caractérisé
en ce que le bord (20) de la zone de bordure (16), avant d'être pressé contre l'autre zone de bordure, est coupé dans la direction longitudinale, de biais ou en gradin, de manière à ce que la couche (6) éloignée des surfaces (10, 12) devant être pressées l'une contre l'autre, dépasse de l'autre couche ou des autres couches (1 à 5) de la feuille, les zones de bordure (14, 16) étant engagées entre deux outils (22, 26), l'un au moins des outils (22, 26) comportant une rainure longitudinale (24) permettant de recevoir les zones de bordure (14, 16) et dans laquelle la couche (6) de la zone de bordure (16) et la couche (6) de la zone de bordure (14) sont façonnées, par fusion intime, en une couche continue sans joint, plane et recouvrant le joint soudé.

2. Procédé selon la revendication 1, caractérisé en ce que le bord (20) de la zone de bordure (16) est coupé selon un angle d'approximativement 40° en se référant à la direction transversale.

3. Procédé selon la revendication 1 ou 2, caractérisé en ce que par l'utilisation d'une feuille comportant une couche métallique (4) et au moins une couche adhésive (3, 5) entre la couche métallique (4) et la couche extérieure (1) et la couche intérieure (6), l'action de chaleur sur la couche extérieure (1) et sur la couche intérieure (6) est engendrée par le chauffage par induction de la couche métallique (4).

4. Procédé selon la revendication 3, caractérisé en ce que le chauffage de la couche intérieure (6) de la zone de bordure (14) et de la couche extérieure (1) de la zone de bordure (16), est contrôlé au cours du soudage, grâce à la mise en oeuvre d'une couche isolante (2) entre la couche métallique (4) et la couche extérieure (1).

5. Procédé selon l'une des revendications précédentes 1 à 4, caractérisé en ce que pour réaliser la liaison continue des zones de bordure (14, 16) qui se chevauchent, les zones de bordure (14, 16) sont insérées en étant pressées l'une contre l'autre, entre deux bandes (22, 26) entraînées en révolution et dont une bande (22) est pourvue d'une rainure longitudinale (24).

6. Procédé selon la revendication 5, caractérisé en ce que la bande (22) comportant la rainure longitudinale (24) subit un pré-chauffage.

7. Conduit tubulaire servant de tube d'emballage formé à partir d'une feuille à couches multiples comprenant des couches (1, 6) susceptibles d'être soudées, le tube présentant un joint soudé formé par des zones de bordure (14, 16) de la feuille, qui se chevauchent et comportent des bords (18, 20), le bord (20) se trouvant à l'intérieur du tube étant recouvert par une couche (6), caractérisé en ce que la couche (6) recouvrant le bord (20) est façonnée par fusion intime, en une couche continue sans joint, plane et recouvrant le joint soudé.

8. Tube selon la revendication 7, caractérisé en ce que la couche recouvrant le joint soudé est réalisée en polyéthylène, en polypropylène et leurs copolymères.

Fig. 1

12

14

18

10

6

20

6

16

12

10

M 50:1

Fig. 2

14

1

2

3

4

5

6

M 100:1

EP 0 264 012 B1

Fig. 3

Fig. 4

EP 0 264 012 B1